# EUROPÄISCHE PATENTSCHRIFT

(11) **EP 0 496 214 B1**
(45) Veröffentlichungstag und Bekanntmachung des Hinweises auf die Patenterteilung: **10.04.1996**
(21) Anmeldenummer: 92100276.2
(22) Anmeldetag: 09.01.1992
(51) Int. Cl.: H04Q 11/04, H04Q 3/58

(54) **Verfahren zur Ersatzschaltung eines Datenstroms**
Method for spare switching of a train of data signals
Procédé pour le basculement sur voie de réserve d'un train de signaux de données

(30) Priorität: 23.01.1991 DE 4101929
(43) Veröffentlichungstag der Anmeldung: 29.07.1992
(73) Patentinhaber: SIEMENS AKTIENGESELLSCHAFT, D-80333 München (DE)
(72) Erfinder: Nagler, Werner, Dipl.-Ing., W-8021 Hohenschäftlarn (DE)

(56) Entgegenhaltungen:
- EP-A- 0 360 924
- EP-A- 0 399 723
- PATENT ABSTRACTS OF JAPAN vol. 11, no. 240 (E-529)(2687) 6. August 1987 & JP-A-62 051 349 (TOSHIBA CORP) 6. März 1987
- IEEE GLOBAL TELECOMMUNICATIONS CONFERENCE & EXHIBITION Bd. 3, 28. November 1988, HOLLYWOOD (US) Seiten 1211 - 1220; SKAPERDA: 'The EWSD today, Plans for tomorrow'
- PROCEEDINGS OF THE INTERNATIONAL SWITCHING SYMPOSIUM, SESSION 33B PAPER 3 Bd. 2, 7. Mai 1984, FLORENCE (IT) Seiten 1 - 6; STAEHLER ET ALL: 'Advances in remote switching concepts'

## Beschreibung

Die Erfindung betrifft ein Verfahren zur Ersatzschaltung eines Datenstromes gemäß dem Oberbegriff des Anspruchs 1.

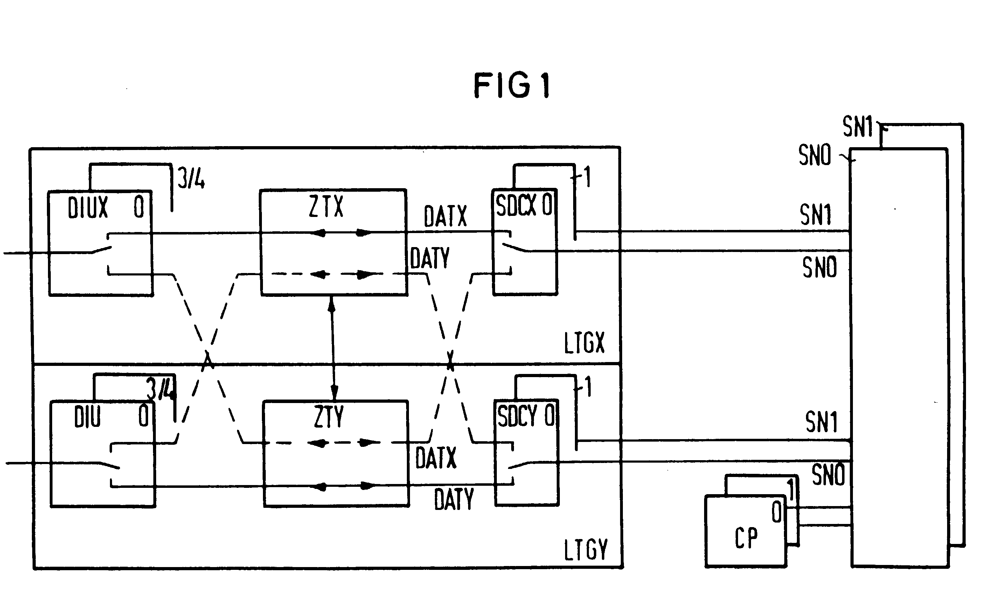

FIG 1 zeigt einen speziellen Anwendungsfall von Umschalteeinrichtungen für Zwei Anschlußgruppen LTGX und LTGY einer Vermittlungsstelle in einem Vermittlungssystem, die einander für den Fall einer Ersatzschaltung von Datenströmen DATX oder DATY zugeordnet sind. Die Vermittlungsstelle besteht aus mehreren solchen jeweils paarweise zugeordneten Anschlußgruppen, einem gedoppelten zentralen koppelnetz SN, und einer gedoppelten zentralen Steuerung CP.

Die beiden dargestellten Anschlußgruppen LTGX und LTGY bestehen jeweils aus einer Verarbeitungseinheit ZTX bzw. ZTY, in der die Vermittlungs- und Steuerungsfunktion der Anschlußgruppe realisiert ist. Des weiteren umfaßt eine Anschlußgruppe Schnittstellenbaugruppen DIU und SDC, die für die Verbindung der Anschlußgruppe zu den Teilnehmern bzw. anderen Vermittlungsstellen und zum zentralen Koppelnetz sorgen, und die insbesondere Umschalteeinrichtungen beinhalten, die die Ersatzschaltung der Datenströme ausführen können.

Eine ausführlichere Beschreibung der in FIG 1 dargestellten Vermittlungsstelle, sowie des Verfahrens im Falle einer Ersatzschaltung des Datenstroms einer Anschlußgruppe findet sich in der europäischen Patentanmeldung EP-A1 0 291 791. Gemäß dieser europäischen Patentanmeldung wird der Datenstrom, d. h. die gesamten Verarbeitungskanäle mit Ausnahme der Meldungskanäle im Ersatzschaltungsfall, aber auch während der Routineprüfung bzw. auch durch manuelle Eingabe über die zugeordnete Verarbeitungseinheit umgelenkt. Dies muß taktgesteuert und phasensynchron erfolgen, wie es in der europäischen Patentanmeldung EP-A1 0 360 924, sowie der europäischen Patentanmeldung EP-A1 0 360 065 über die Steuerung des Meldungskanals näher beschrieben wird.

Die Umschalteeinrichtung in Richtung von und zum Koppelnetz ist dabei auf der von der jeweiligen Steuerung der Anschlußgruppe unabhängigen Schnittstellenbaugruppe SDC untergebracht und in FIG 1 durch einen Schalter dargestellt. Die Steuerung einer Umschalteeinrichtung auf der Schnittstellenbaugruppe SDC wird durch ein Umschaltesignal bewirkt, das von einer jeweils in einer Verarbeitungseinheit enthaltenen Anreizeinrichtung abgegeben werden kann.

Es ist bekannt, die bei Ausfall einer Anreizeinrichtung notwendige Ersatzschaltung durch die in der zugeordneten Verarbeitungseinheit enthaltene Anreizeinrichtung zu veranlassen.

Dies hat den Nachteil, daß zum einen für die Überwachung einer in einer Verarbeitungseinheit enthaltenen Anreizeinrichtung in der zugeordneten anderen Verarbeitungseinheit zusätzlich eine entsprechende Überwachungseinrichtung benötigt wird, zum anderen ein für die Überwachung notwendiger Übertragungskanal zwischen den beiden einander zugeordneten Verarbeitungseinheiten vorhanden sein muß. Des weiteren besteht die Gefahr, daß die jeweils überwachende Verarbeitungseinheit fälschlicherweise eine Ersatzschaltung veranlaßt.

Der Erfindung liegt die Aufgabe zugrunde, die genannten Nachteile zu vermeiden.

Diese Aufgabe wird durch die Merkmale des Anspruchs 1 gelöst.

Das Verfahren nach Anspruch 2 besitzt insbesondere den Vorteil der besonderen Einfachheit, da sich bei Ausfall der Anreizeinrichtung im allgemeinen von selbst ein statischer Signalzustand des Umschaltesignals einstellt.

Das Verfahren nach Anspruch 4 besitzt insbesondere den Vorteil, daß die Ersatzschaltung des Datenstromes, sobald ein Fehlerfall erkannt wurde, sehr schnell erfolgen kann, da einer Umschalteeinrichtung zur Ausgabe des Datenstromes ständig zwei identische Datenströme zugeführt werden.

Es folgt die Figurenliste der Zeichnung.

FIG 1 zeigt einen speziellen Anwendungsfall von Umschalteeinrichtungen gemäß dem Stand der Technik.

FIG 2 zeigt die Erzeugung eines erfindungsgemäßen Umschaltesignals in der Verarbeitungseinheit einer Anschlußgruppe gemäß Figur 1.

FIG 3 zeigt eine Schnittstelleneinheit einer Anschlußgruppe in Richtung des zentralen Koppelnetzes zur Umschaltung eines Datenstroms und zur Regeneration der Systemtakte.

FIG 4 zeigt eine Auswerteschaltung der Umschalteeinrichtung zur Überwachung des Umschaltesignals.

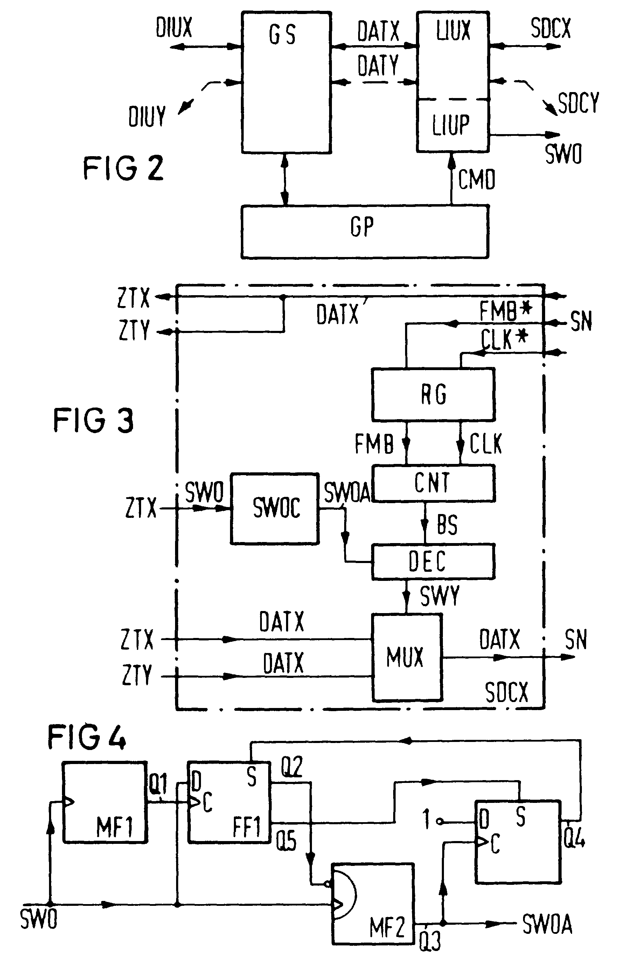

Es folgt die Erläuterung eines Ausführungsbeispiels der Erfindung anhand der Figuren 2 bis 4.

Fig. 2 zeigt die Erzeugung eines erfindungsgemäßen Umschaltesignals SWO in der Verarbeitungseinheit ZTX der Anschlußgruppe LTGX gemäß Figur 1.
Die Verarbeitungseinheit besteht im wesentlichen aus einem Gruppenprozessor GP zur Realisierung der Steuerungsfunktion, einem Gruppenkoppler GS zur Realisierung der Vermittlungsfunktion und einer Schnittstelleneinheit LIUX zur Verbindung der Verarbeitungseinheit ZTX mit den Schnittstelleneinheiten SDCX und SDCY, die die Schnittstellen zwischen den Anschlußgruppen und dem Koppelnetz darstellen.

Die Steuerungsfunktion des Gruppenprozessors GP beinhaltet insbesondere die Funktion einer Anreizeinrichtung zur Erzeugung eines Anreizsignals CMD in Abhängigkeit von bestimmten Umschaltebedingungen. Das Umschaltesignal SWO wird in einer Steuerungseinrichtung LIUP der Schnittstelle LIUX erzeugt. Es wird durch das Anreizsignal CMD des Gruppenprozessors aktiviert. Falls der Gruppenprozessor bei bestimmten Fehlerfällen nicht mehr in der Lage ist, aktiv das Umschalte-Kommando zu schicken, schaltet die Steuereinrichtung LIUP das Umschaltesignal in einen statischen Signalzustand. Dazu ist in der Steuereinrichtung LIUP eine Zeitüberwachung von etwa 1 Sek. realisiert, die nach Ausbleiben der Anreizimpulse des Anreizsignals CMD den Umschaltevorgang einleitet.

Das Umschaltesignal SWO ist in seinem aktiven Signalzustand ein pulsförmiges Signal von 20 mSek. Periode und mit einem Tastverhältnis 1:1. Nur in diesem aktiven Signalzustand ist die eigene Steuerung angeschaltet. Im passiven Signalzustand ist dieses Umschaltesignal SWO ein statisches Signal und liegt entweder auf logisch 1 oder logisch 0 je nach zufälligem Schaltzeitpunkt des entsprechenden Schaltgliedes der Steuerungseinrichtung LIUP.

Im statischen Signalzustand des Umschaltesignals wird der Datenweg DATX gemäß Figur 1 immer auf die Partneranschlußgruppe LTGY umgeleitet. Das Umschaltesignal SWO wird von der Steuerungseinrichtung LIUP mittels eines Software-Zeitgebers erzeugt. Die Steuerungseinrichtung LIUP kann den passiven Signalzustand des Umschaltesignals bzw. durch Abschalten des Umschaltesignals erzeugen.

Figur 3 zeigt die Schnittstelleneinheit SDCX zur Umschaltung des Datenstroms DATX und zur Regeneration der Takte CLK und FMB vom Koppelnetz SN, die im folgenden vereinfachten als Umschalteeinrichtung SDCX bezeichnet wird.
Die Stromversorgung der Umschalteeinrichtung ist von der Stromversorgung der zentralen Einheit ZTX unabhängig, so daß der Umschaltevorgang auch bei Ausfall der Stromversorgung der zentralen Einheit erfolgen kann.

Das Umschaltesignal wird auf der Umschalteeinrichtung SDCX mittels einer speziellen Auswerteschaltung SWOC überwacht. Genauer gesagt wird der Ausfall des Pulssignals bzw. das Auftreten eines statischen Signalzustandes, d. h. einer logischen 0 oder einer logischen 1, überwacht. Kurze Störimpulse werden eliminiert. Bleibt das pulsförmige Umschaltesignal aus, so schaltet der Ausgang der Auswerteschaltung nach etwa 60 mSek. von logisch 0 auf logisch 1 und veranlaßt dadurch den Umschaltevorgang.

Durch die spezielle Art der Ansteuerung der Umschalteeinrichtung mit Hilfe des Umschaltsignals SWO ist die Umschalteeinrichtung SDCX bei einem Ausfall der zentralen Einheit ZTX in der Lage, den Umschaltevorgang selbständig zu veranlassen und durchzuführen.

Das Ausgangssignal der Auswerteschaltung SWOC bewirkt nicht direkt den Umschaltevorgang, da dieses Signal zu einem beliebigen Zeitpunkt auftreten, d. h. also auch asynchron zum Systemtakt auftreten kann.

Damit die eigentliche Umschaltung exakt auf einer Datenbytegrenze ausgeführt werden kann, wird zusätzlich ein Bytesignal BS benötigt, das jeweils exakt an einer Datenbytegrenze seinen Signalzustand in eine bestimmte Richtung ändert und damit eine bestimmte Flanke erzeugt. Dieses Bytesignal BS wird in Figur 3 mit Hilfe eines Zählers CNT aus dem Systemtakt CLK und dem Rahmentakt FMB abgeleitet. Das Rahmentaktsignal FMB sorgt dabei dafür, daß der Zähler CNT bei jedem Rahmenbeginn auf einen bestimmten Zählerstand gesetzt wird und dadurch auf den Rahmen synchronisiert bleibt.

Eine Logik DEC erzeugt das eigentliche Umschaltesteuersignal SWY in Abhängigkeit des asynchronen Umschaltesignals SWOA und des Bytesignals BS. Der Zustand des eigentlichen Umschaltesteuersignals SWY steuert schließlich den Schaltzustand eines Multiplexers MUX und damit die Durchschaltung des Datenstroms DATX von der zentralen Einheit ZTX oder ZTY in Richtung des Koppelnetzes SN.

Figur 4 zeigt die Auswerteschaltung SWOC zur Überwachung des Umschaltesignals SWO. Die Auswerteschaltung besteht aus einem ersten und zweiten Monoflop MF1 und MF2, sowie einem ersten und zweiten Flipflop FF1 und FF2. Die Triggerung der Monoflops und der Flipflops erfolgt jeweils durch eine aufsteigende Flanke des jeweiligen Takteingangssignals. Bei den Flipflops handelt es sich um D-Flipflops ohne Durchschaltverzögerung.

Das Umschaltesignal SWO ist in seinem aktiven Signalzustand wie bereits erwähnt ein periodisches Signal von 10 mSek Pulsdauer und ebeso langer Pulspause.
Das erste Monoflop MF1 und das erste Flip-Flop FF1 überwachen gemeinsam das Umschaltesignal auf die definierte Pulsform. Das erste Monoflop hat eine Eigenzeit von ca. 15 mSek. Das zweite Monoflop MF2 hat eine Eigenzeit von ca. 60 mSek und dient dazu, die Pulsperiooen des Umschaltesignals zu überwachen, d.h. bei Ausbleiben einer ansteigenden Flanke des Umschaltesignals über einen Zeitraum von mehr als 60 mSek das asynchrone Umschaltesignal SWOA von logisch 0 auf logisch 1 zu schalten.
Das erste und zweite Flip-Flop sorgen gemeinsam zum einen für ein Zurücksetzen der Auswerteschaltung, wenn das Umschaltesignal einen nicht definierten pulsförmigen oder statischen Signalzustand einnimmt und zum anderen für eine Unterdrückung von Störimpulsen im zurückgesetzten Zustand, wodurch ein Zurückschalten des Datenstromes über das asynchrone Umschaltesignal SWOA verhindert wird.

Im Normalfall wird das erste Monoflop MF1 durch die ansteigende Flanke des aktiven Umschaltesignals SWO getriggert und schaltet den inversen Ausgang Q1 nach logisch 0. Nach Ablauf der Eigenzeit des ersten Monoflops von 15 mSek wird mit der ansteigenden Signalflanke des invrsen Ausgangs Q1 das erste Flip-Flop FF1 getaktet. Das erste Flip-Flop übernimmt den Zustand des Umschaltesignals über den Eingang D zum Ausgang Q2. Das Signal des Ausgangs Q2 steuert den Eingang des zweiten Monoflops MF2. Im Normalfall, d.h. definierte Pulsdauer des Umschaltesignals, wird das zweite Monoflop MF2 freigegeben, während im Fehlerfall (z.B. Pulslänge größer 15 mSek, Pulspause kleiner 5 mSek) oder im Prüffall (statisches Umschaltesignal) das zweite Monoflop MF2 gesperrt wird.

Durch diese Steuerung des zweiten Monoflops kann über das asynchrone Umschaltesignal SWOA der Ersatzschaltezustand ausgelöst werden, wenn ein passives Umschaltesignal SWO, d.h. eine undefinierte Pulsform des Umschaltesignals oder ein statisches Umschaltesginal SWO, vorliegt.

Das zweite Monoflop MF2 überwacht durch seine Eigenzeit von 60 mSek das Umschaltesignal SWO auf seinen periodischen Zyklus. Bei richtigem Pulszyklus wird das zweite Monoflop ständig neu getriggert und liefert am inversen Ausgang Q3 eine logische 0. Wenn das zweite Monoflop in dieser Eigenschaft nicht neu getriggert wird, fällt es in seine Ruhelage (inverser Augang Q3 auf logisch 1) zurück und veranlaßt damit asynchron über das asynchrone Umschaltesignal SWOA ein Umschalten des Datenstroms DATX.

Der Übergang des zweiten Monoflops in seine Ruhelage liefert auch eine ansteigende Signalflanke am Takteingang C des zweiten Flip-Flops FF2 und bewirkt damit über den Ausgang Q4 ein Setzen des ersten Flip-Flops FF1 und damit ein Sperren des Eingangs am zweiten Monoflop MF2. Gleichzeitig wird übe den inversen Ausgang Q5 des ersten Flip-Flops FF1 auch das zweite Flip-Flop FF2 wieder zurückgesetzt.

Die Auswerteschaltung SWOC nimmt somit den Ruhezustand ein, wenn am Takteingang des zweiten Monoflops keine Pulse definierter Länge oder Dauersignale nkommen. Das zweite Monoflop liefert in diesem Zustand, der auch nach Spannungseinschalten eingenommen wird, am inversen ausgang Q3 das asynchrone Umschaltesignal SWOA mit dem Pegel logisch 1 und veranlaßt dadurch ein Umschalten des Datenstroms DATX. Außerdem ist in diesem Ruhezustand über das erste Flio-Flop FF1 der Eingang des zweiten Monoflops MF2 gesperrt. Dadurch wirdder erste ankommende Impuls des Umschaltesignals nur in das erste Monoflop und das erste Flip-Flop übernommen, wogegen das zweite Monoflop erst durch den zweiten Impuls des Umschaltesignals aktiviert wird. Durch diese Schaltungsmaßnahme wird eine Ausblendung von Störimpulsen erreicht, und ein fälschliches Zurückschalten des Datenstroms DATX verhindert.

## Patentansprüche

1. Verfahren zur Ersatzschaltung eines Datenstroms (DATX, DATY) bei zwei einander hierzu zugeordneten Verarbeitungseinheiten (ZTX, ZTY) einer Fernmeldevermittlungsstelle, demgemäß
a) ein jeweils einer Verarbeitungseinheit zur Verarbeitung zugeführter Datenstrom im Normalfall nach seiner Verarbeitung über ihr zugeordnete Schnittstellen (SDC, DIU) weiteren Einheiten der Fernmeldevermittlungsstelle bzw. des Fernmeldevermittlungssystems zugeführt wird,
b) der genannte Datenstrom bei Ausfällen in der einen genannten Verarbeitungseinheit oder zu Prüfzwecken über die zugeordnete andere Verarbeitungseinheit umgeleitet wird und nach entsprechender Verarbeitung, so wie der im Normalfall von der einen Verarbeitungseinheit verarbeitete Datenstrom, den genannten weiteren Einheiten zugeführt wird,
c) die Ersatzschaltung des Datenstroms durch Umschalteeinrichtungen in den genannten Schnittstellen ausgeführt und durch eine Anreizeinrichtung in einer Verarbeitungseinrichtung gesteuert wird,
**dadurch gekennzeichnet,** daß
d) die Schaltezustände einer Umschalteeinrichtung durch genau eine Anreizeinrichtung gesteuert werden,
e) bei Ausfall der genannten Anreizeinrichtung die Ersatzschaltung des Datenstroms von der betreffenden Umschalteeinrichtung selbständig durchgeführt wird.

2. Verfahren nach Anspruch 1, bei dem die Schaltezustände einer Umschalteeinrichtung mit Hilfe eines durch die Anreizeinrichtung gesteuerten Umschaltesignals (SWO) gesteuert werden,
**dadurch gekennzeichnet,** daß
a) die Umschalteeinrichtung in den Schaltezustand des Normalfalls gesteuert wird, wenn das Umschaltesignal einen pulsförmigen Signalzustand annimmt,
b) die Umschalteeinrichtung in den Schaltzustand des Ersatzschaltungsfalles gesteuert wird, wenn das Umschaltesignal einen statischen Signalzustand annimmt.

3. Verfahren nach Anspruch 2,
**dadurch gekennzeichnet**, daß
a) das Umschaltesignal von einer Pulserzeugungseinrichtung (LIUP) erzeugt und die Pulserzeugungseinrichtung durch Anreizimpulse (CMD) der Anreizeinrichtung (GP) gesteuert wird,
b) das Umschaltesignal in den pulsförmigen Signalzustand gesteuert wird, wenn die Anreizimpulse in genügend zeitlicher Dichte aufeinanderfolgen,
c) das Umschaltesignal in den statischen Signalzustand gesteuert wird, wenn die Anreizimpulse nicht in genügend zeitlicher Dichte aufeinanderfolgen.

4. Verfahren nach Anspruch 1 bis 3,
**dadurch gekennzeichnet**, daß
a) der einer Verarbeitungseinheit zur Verarbeitung zugeführte Datenstrom gleichzeitig ebenfalls von der ihr zugeordneten Verarbeitungseinheit empfangen und verarbeitet wird,
b) die Ersatzschaltung des Datenstromes durch Umschalten in einer Umschalteeinrichtung zur Ausgabe des Datenstromes an weitere Einheiten erfolgt.

## Claims

1. Method for the protection switching of a data stream (DATX, DATY) in the case of two processing units (ZTX, ZTY) of a telecommunication exchange assigned to each other for this purpose, according to which
a) a data stream respectively supplied to a processing unit for processing is normally supplied after its processing to further units of the telecommunication exchange or of the telecommunication switching system via interfaces (SDC, DIU) assigned to the said processing unit,
b) in the event of outages in the one said processing unit, or for test purposes, the said data stream is rerouted via the assigned other processing unit and, after corresponding processing, is supplied to the said further units just as the data stream normally processed by the one processing unit,
c) the protection switching of the data stream is executed by switchover means in the said interfaces and is controlled by an initiation means in a processing means,
characterized in that
d) the switching states of a switchover means are controlled by just one initiation means,
e) in the event of outage of the said initiation means, the protection switching of the data stream is carried out independently by the switchover means concerned.

2. Method according to Claim 1, in which the switching states of a switchover means are controlled with the aid of a switchover signal (SWO) controlled by the initiation means, characterized in that
a) the switchover means is controlled such that it goes into the switching state of the normal case if the switchover signal assumes a pulsed signal state,
b) the switchover means is controlled such that it goes into the switching state of the protection switching case if the switchover signal assumes a static signal state.

3. Method according to Claim 2, characterized in that
a) the switchover signal is generated by a pulse generating means (LIUP) and the pulse generating means is controlled by initiation pulses (CMD) of the initiation means (GP),
b) the switchover signal is controlled such that it goes into the pulsed signal state if the initiation pulses follow one another in sufficiently close succession over a time,
c) the switchover signal is controlled such that it goes into the static signal state if the initiation pulses do not follow one another in sufficiently close succession over time.

4. Method according to Claims 1 to 3, characterized in that
a) the data stream supplied to one processing unit for processing is simultaneously received and processed likewise by the processing unit assigned to the said one processing unit,
b) the protection switching of the data stream takes place by switching over in a switchover means for output of the data stream to further units.

## Revendications

1. Procédé de commutation sur secours d'un flux (DATX, DATY) de données dans deux unités (ZTX, ZTY) de traitement, associées à cet effet l'une à l'autre, d'un central de télécommunication, selon lequel
a) on envoie un flux de données, envoyé pour le traitement à une unité de traitement, dans le cas normal après son traitement, par l'intermédiaire d'interfaces (SDC, DIU) qui leur sont associés, à d'autres unités du central de télécommunication ou du système de commutation de télécommunication,
b) on achemine ledit flux de données en cas de pannes dans ladite unité de traitement ou à des fins de vérification par l'intermédiaire de l'autre unité de traitement associée et on l'envoie après traitement correspondant, donc comme le flux de données traité dans le cas normal par l'unité de traitement, aux dites autres unités,
c) on effectue la commutation sur secours du flux de données par des dispositifs de commutation dans lesdites interfaces et on la commande par un dispositif d'excitation dans un dispositif de traitement,
caractérisé en ce que
d) on commande les états de commutation d'un dispositif de commutation par exactement un dispositif d'excitation,
e) on effectue automatiquement la commutation sur secours du flux de données par le dispositif de commutation concerné en cas de panne dudit dispositif d'excitation.

2. Procédé suivant la revendication 1, dans lequel on commande les états de commutation d'un dispositif de commutation à l'aide d'un signal (SWO) de commutation commandé par le dispositif d'excitation,
caractérisé en ce que
a) on commande le dispositif de commutation dans l'état de commutation du cas normal, si le signal de commutation prend un état de signal en forme d'impulsion,
b) on commande le dispositif de commutation dans l'état de commutation du cas de commutation sur secours, si le signal de commutation prend un état de signal statique.

3. Procédé suivant la revendication 2,
caractérisé en ce que
a) on produit le signal de commutation par un dispositif (LIUP) de production d'impulsions et on commande le dispositif de production d'impulsions par des impulsions (CMD) d'excitation du dispositif (GP) d'excitation,
b) on fait passer le signal de commutation à l'état de signal en forme d'impulsion, si les impulsions d'excitation se suivent en étant suffisamment rapprochées l'une de l'autre dans le temps,
c) on fait passer le signal de commutation à l'état de signal statique, si les impulsions d'excitation se suivent en n'étant pas suffisamment rapprochées l'une de l'autre dans le temps.

4. Procédé suivant l'une des revendications 1 à 3,
caractérisé en ce que
a) on reçoit et on traite le flux de données envoyé pour le traitement à une unité de traitement aussi en même temps par l'unité de traitement qui est associée à cette unité de traitement,
b) on effectue la commutation sur secours du flux de données par commutation dans un dispositif de commutation destiné à la fourniture du flux de données à d'autres unités.
